# EUROPEAN PATENT SPECIFICATION

(11) **EP 4 427 701 B1**
(45) Date of publication and mention of the grant of the patent: **29.10.2025**
(21) Application number: 23208683.5
(22) Date of filing: 09.11.2023
(51) Int. Cl.: A61C 7/00

(54) **ORTHODONTIC SET OF GUIDING CAP AND COMPATIBLE SCREW**
ORTHODONTISCHES SET MIT FÜHRUNGSKAPPE UND KOMPATIBLER SCHRAUBE
ENSEMBLE ORTHODONTIQUE DE CAPUCHON DE GUIDAGE ET DE VIS COMPATIBLE

(30) Priority: 07.03.2023 TR 202302521
(43) Date of publication of application: 11.09.2024
(73) Proprietor: 3d Ortho Medikal 3d Modelleme Danismanlik Egitim Sanayi ve Ticaret Limited Sirketi, Izmir Karsiyaka (TR)
(72) Inventor: ATICI, Fatih, Izmir (TR); KIZILTEKIN, Rana, San Francisco (US)
(74) Representative: Zaboliene, Reda

(56) References cited:
- WO-A1-2020/245007
- WO-A1-2022/035392
- US-A1- 2022 104 857

## Description

### Technical Field

The invention relates to an orthodontic set of a guiding cap and a compatible screw that allows the insertion of the orthodontic screw with the desired direction and depth to the bone.

### Prior art

WO2022035392A1 and WO2020245007A1 both show an orthodontic screw having a threaded head and a cylindrical neck with a smaller diameter than the threaded head. The threaded head engages a corresponding threading in a support bar.

In the classical method, the orthodontic appliances are supported by teeth. Nowadays, mini screws have been added to these classical appliances and bone-supported types have begun to be widely used.

Instead of getting support from the teeth, providing this support from mini screws that implanted into the palate bone, significantly increases the efficiency of the orthodontic appliance.

### Application steps of mini screw supported appliances

In order to apply a mini screw-supported orthodontic appliance in the mouth, screws must be inserted in the palate in the first appointment.

Afterward, the clinician must take an impression for inserted screws. This impression is sent to the technician and the mini screw-supported orthodontic appliance is prepared in the laboratory according to the position of the screws on the palate. In the second appointment, the appliance that comes from the technician is applied to the mouth.

In this method, it may be possible that the appliance does not fit properly on the screws. This is entirely dependent on the experience and skill of the clinician and technician. At the same time, the appliance must be applied at the next appointment, not at the first session where the screws are inserted.

In this old treatment method, the patient must make two appointments for the procedure. If the clinician could not place the mini screws in parallel in the first appointment, the appliance produced for the second appointment could not adapt on the screws. As a result of this technique used today, problems such as loss of time and repetition of production always pose a risk for clinicians.

### The Aim of the Invention

The invention relates to an orthodontic set of a guiding cap and a compatible screw that can solve the above-mentioned problems.

The main purpose of the invention is to ensure that the screw placed inside the guiding cap is applied in a single session, in the desired direction and depth, without deviation, with the help of the guide surface in the cap structure.

The aim of the invention is to enable orthodontists to successfully apply orthodontic appliances to patients at single session and without the need for additional operations.

### Detailed Description of the Invention

The subject matter of the invention, the orthodontic set of guiding caps, and the compatible screw are shown in the appended figures.

### Figures;

**Figure-1** Disassembled view of both screw and guide cap
**Figure-2** Perspective view of screw from top
**Figure-3** Cylinder surface, visualization of slot and diameter relationship
**Figure-4** Aligned view of the guide cap with the cylinder surface
**Figure-5** View of the screw inserted into threaded part of the guide cap

In the figures above, the parts are numbered as follows.
1-Screw
2- Guide surface inside the cap, compatible with the screw
3-Threaded head
4-Threaded part of the guide cap
5-Guide cap
6-Threaded tip of the screw
7-Cylinder guide surface compatible with the cap

The subject of the invention is a locking apparatus used in orthodontic operations comprising a screw and a guide cap as defined in claim 1.

It consists of a screw(1) that allows the appliance to be fixed in the palate bone. The guide cap(5) contains an inner guide surface(2) that allows the screw(1) to align in the desired direction. The threaded part of the cap (4) and the threaded head (3) of the screw head provide locking to each other (Figure- 1).

Structurally, the screw(1) consists of a threaded tip(6) which is inserted in the palate bone during the application and a cylinder guide surface(7) which has a flat form providing the screw (1) to be aligned in the guide cap(5).(Figure -2)

The guide cap(5) is the component that provides the locking of the screw and connection to the applaince(1). There are two structural parts in the guide cap (5), which are the inner guide surface(2) and the threaded part(3).

The guide surface inside the cap(2) is of the same form as the cylinder guide surface(7). The length of the guide surface inside the cap(2) is at least 1/3 of the length of the cylinder guide surface (7). When the insertion of the screw(1) in the palate bone is completed, the threaded head(3) is connected to the threaded part of the cap(4). (Figure -4)

The diameter of the cylinder guide surface(7) is greater than the diameter of the threaded tip of the screw end(6)**.**

This allows the screw(1) to be inserted properly into the guide cap(5) and the operation can end safely(Figure-3).

As the screw (1) begins to move into the palatal bone, the cylinder guide surface (7) gets closer to the inner guide surface (2) of the cap. While the movement of the screw(1) , the cylinder guide surface(7) makes a tight fit into the guide surface inside the cap(2).

By aligning the cylinder guide surface(7) to the inner guide surface inside the cap(2), the screw(1) is prevented from bending and moving in an unwanted direction. This prevents anatomical tissue damage that may occur during application(Figure-5).

With the help of the guide surface (2) inside the cap, into which the cylindrical surface(7) on the screw (1) structure is aligned, the direction of the screw (1) in the palate bone is fixed during and after the operation, and in case more than one screw is used, they are ensured to be parallel to each other.

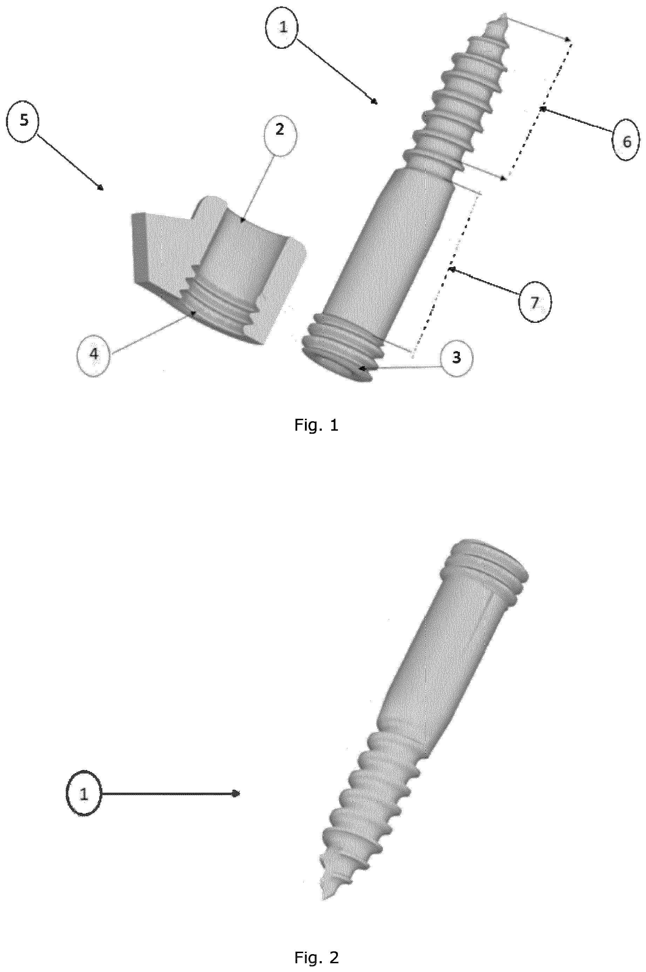

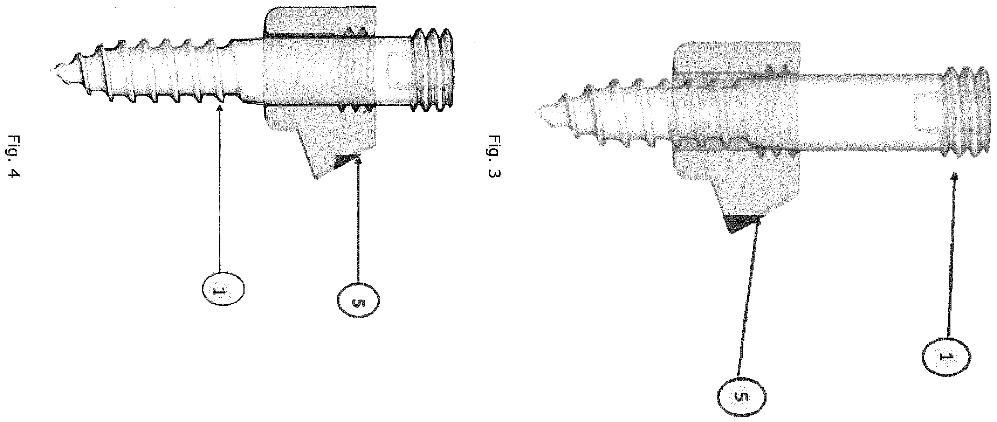

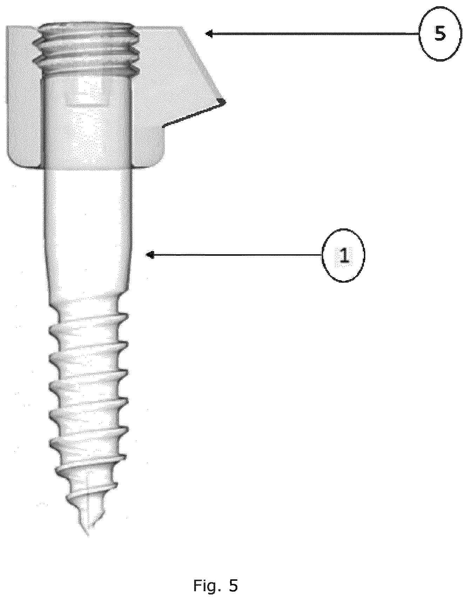

## Claims

1. A locking apparatus for use in orthodontic operations, comprising
a screw (1) consisting of a threaded tip (6) to be inserted in the palate bone,
a cylindrical guide surface (7) continuing from said threaded tip (6) of the screw (1), and a threaded head (3) continuing from said cylindrical guide surface (7); and
a guide cap (5) with an inner guide surface (2) that secures the alignment of said cylindrical guide surface (7) to said inner guide surface (2) allowing the screw (1) to advance in the palate bone without bending, and a threaded part (4) so that when the insertion of the screw (1) in the palate bone is completed, the threaded head (3) of the screw (1) is connected to the threaded part of the cap (4);
wherein the diameter of said cylinder guide surface (7) is equal to the diameter of said threaded part of the guide cap (4).

## Patentansprüche

1. Eine Verriegelungsvorrichtung zur Verwendung bei kieferorthopädischen Operationen, umfassend
eine Schraube (1), bestehend aus einer Gewindespitze (6) zum Einsetzen in den Gaumenknochen, einer zylindrischen Führungsfläche (7), die sich an die besagte Gewindespitze (6) der Schraube (1) anschließt, und einem Gewindekopf (3), der sich an die besagte zylindrische Führungsfläche (7) anschließt; und
eine Führungskappe (5) mit einer inneren Führungsfläche (2), die die Ausrichtung der besagten zylindrischen Führungsfläche (7) an der besagten inneren Führungsfläche (2) sicherstellt und es der Schraube (1) ermöglicht, im Gaumenknochen vorzudringen, ohne sich zu verbiegen, und mit einem Gewindeteil (4), sodass, wenn das Einsetzen der Schraube (1) in den Gaumenknochen abgeschlossen ist, der Gewindekopf (3) der Schraube (1) mit dem Gewindeteil der Kappe (4) verbunden ist;
wobei der Durchmesser der besagten zylindrischen Führungsfläche (7) gleich dem Durchmesser des besagten Gewindeteils der Führungskappe (4) ist.

## Revendications

1. Un appareil de verrouillage destiné à être utilisé dans des opérations orthodontiques, comprenant
une vis (1) constituée d'une pointe filetée (6) destinée à être insérée dans l'os palatin, d'une surface de guidage cylindrique (7) se prolongeant depuis ladite pointe filetée (6) de la vis (1), et d'une tête filetée (3) se prolongeant depuis ladite surface de guidage cylindrique (7); et
un capuchon de guidage (5) avec une surface de guidage intérieure (2) qui assure l'alignement de ladite surface de guidage cylindrique (7) sur ladite surface de guidage intérieure (2) permettant à la vis (1) d'avancer dans l'os palatin sans fléchir, et une partie filetée (4) de sorte que, lorsque l'insertion de la vis (1) dans l'os palatin est terminée, la tête filetée (3) de la vis (1) est reliée à la partie filetée du capuchon (4);
dans lequel le diamètre de ladite surface de guidage cylindrique (7) est égal au diamètre de ladite partie filetée du capuchon de guidage (4).
